# EUROPEAN PATENT SPECIFICATION

(11) **EP 1 992 403 B1**
(45) Date of publication and mention of the grant of the patent: **09.03.2011**
(21) Application number: 07301042.3
(22) Date of filing: 15.05.2007
(51) Int. Cl.: B01F 5/02, B01F 13/00, B01J 19/00

(54) **Microfluidic self-sustaining oscillating mixers and devices and methods utilizing same**
Mikrofluidische und selbstverzögernde oszillierende Mischer sowie Vorrichtungen und Verfahren zu deren Verwendung
Mélangeurs microfluidiques à oscillantions auto-entretenues et dispositifs et procédés les utilisant

(43) Date of publication of application: 19.11.2008
(73) Proprietor: Corning Incorporated, Corning NY 14831 (US)
(72) Inventor: Woehl, Pierre, 77240 Cesson (FR)
(74) Representative: Le Roux, Martine

(56) References cited:
- WO-A-03/024597
- US-A1- 2004 234 424
- KOLSEK ET AL: "Numerical study of flow asymmetry and self-sustained jet oscillations in geometrically symmetric cavities" APPLIED MATHEMATICAL MODELLING, GUILDFORD, GB, vol. 31, no. 10, 24 April 2007 (2007-04-24), pages 2355-2373, XP022047017 ISSN: 0307-904X

## Description

### BACKGROUND OF THE INVENTION

Microfluidic devices, as understood herein, includes fluidic devices over a scale ranging of microns to a few millimeters, that is, devices with fluid channels the smallest dimension of which is in the range of microns to a few millimeters, and preferably in the range of from about 10 tens of microns to about 1±0.5 millimeters. Partly because of their characteristically low total process fluid volumes and characteristically high surface to volume ratios, microfluidic devices, specifically microreactors, can be useful to perform difficult, dangerous, or even otherwise impossible chemical reactions and processes in a safe, efficient, and environmentally-friendly way.

Various types of mixing or contacting chambers are known for use in microfluidic devices. An instance of such a chamber having two separate feed channels separated by an inter-channel wall, with the two channels terminating at a common side of the chamber is shown in Fig. 4 of document WO 2003/023597 which discloses a device in accordance with the preamble of claim 1, and a method in accordance with the preamble of claim 10.

In microreactors including microfluidic mixers where several reactants are supposed to be mixed together very rapidly with respect to the reaction kinetics timescale, desirable flowrates may range from a few milliliters per minute to several hundreds of milliliters per minute, depending on the application: lab, pilot or production. In biological applications of such mixers, flowrates may be only in the microliter per minute range. It would be desirable to have a single type of mixer or mixer geometry that may useful across this wide range of flow rates. It is also desirable that the mixing quality achieved in a given mixer be as independent of the flowrate as possible, and that the mixer have the property of allowing heat to be removed efficiently from the mixing fluid(s). It is also desirable to achieve good mixing quality with low pressure drop.

### SUMMARY OF THE INVENTION

A microfluidic device in accordance with claim 1 for performing chemical or biological reactions comprises a chamber for use as a self-sustaining oscillating jet mixing chamber and two or more separate feed channels separated by one or more inter-channel walls, the two or more channels terminating at a common side of the chamber, the two or more channels having a total channel width comprising the widths of the two or more channels and all inter-channel walls taken together, the chamber having a width in a direction perpendicular to the channels and a length in a direction parallel to the channels, the width being at least two times the total channel width, the chamber having two opposing major surfaces defining a height thereof, the chamber having a major-surface-area to volume ratio of at least 10 cm²/cm³

A method in accordance with claim 10 of microfluidic fluid mixing using a self-sustaining oscillating jet includes providing one or more separate feed channels and a chamber, each of the one or more channels entering the chamber at a common wall of the chamber, the one or more separate channels having a total channel width comprising the widths of the one or more separate channels and all inter-channel walls taken together, the chamber having at least one exit channel, the chamber having a width in a direction perpendicular to the one or more channels of at least two times the total channel width. The method further includes flowing one or more fluid streams through the feed channels into the chamber at a sufficient rate to induce a self-sustaining oscillating jet within the chamber. The chamber desirably has a major-surface-area to volume ratio of at least 10 cm²/cm³.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

### BRIEF DESCRIPTION OF THE DRAWINGS

Figure 1 is a cross-sectional plan view of one embodiment of the present invention;

Figure 2 is a cross-sectional elevation view of the structure of Figure 1 taken along the line A-A of Figure 1.

Figure 3 is a cross-sectional plan view of another embodiment of the present invention;

Figure 4 is a cross-sectional plan view of yet another embodiment of the present invention;

Figure 5 is a cross-sectional plan view of still another embodiment of the present invention;

Figure 6 is an alternate cross-sectional elevation view of the structure of Figure 1 taken along the line A-A of Figure 1, corresponding to an alternative embodiment of the invention to that of Figure 2.

Figure 7 is an alternate cross-sectional elevation view of the structure of Figure 1 taken along the line A-A of Figure 1, corresponding to yet another alternative embodiment of the invention to that of Figures 2 and 6.

Figure 8 is a cross-sectional plan view of still another embodiment of the present invention;

Figure 9 is a cross-sectional plan view of yet another embodiment of the present invention;

Figure 10 is a cross-sectional plan view of still one more embodiment of the present invention;

Figure 11 is a schematic diagram showing one arrangement of multiple microfluidic mixers according to an embodiment of the present invention;

Figure 12 is a schematic diagram showing another arrangement of multiple microfluidic mixers according to another embodiment of the present invention;

Figure 13 is Figure 10 is a cross-sectional plan view of yet one more embodiment of the present invention.

Figure 14 is a graph of high speed mixing performance as a function of flow rate in milliliters per minute for some embodiments of the present invention and one comparative example.

Figure 15 is a graph of pressure drop in millibar as a function of flow rate in milliliters per minute for some embodiments of the present invention and one comparative example.

Figure 16 is a graph of particle size distribution, by percentage of total volume, as a function of logarithmic-scaled particle size in microns, as produced for different flow rates in a test reaction by embodiments of the present invention.

### DETAILED DESCRIPTION OF THE PREFERRED EMBODIMENTS

Reference will now be made in detail to the presently preferred embodiments of the invention, examples of which are illustrated in the accompanying drawing. Whenever possible, the same reference numerals will be used throughout the drawings to refer to the same or like parts.

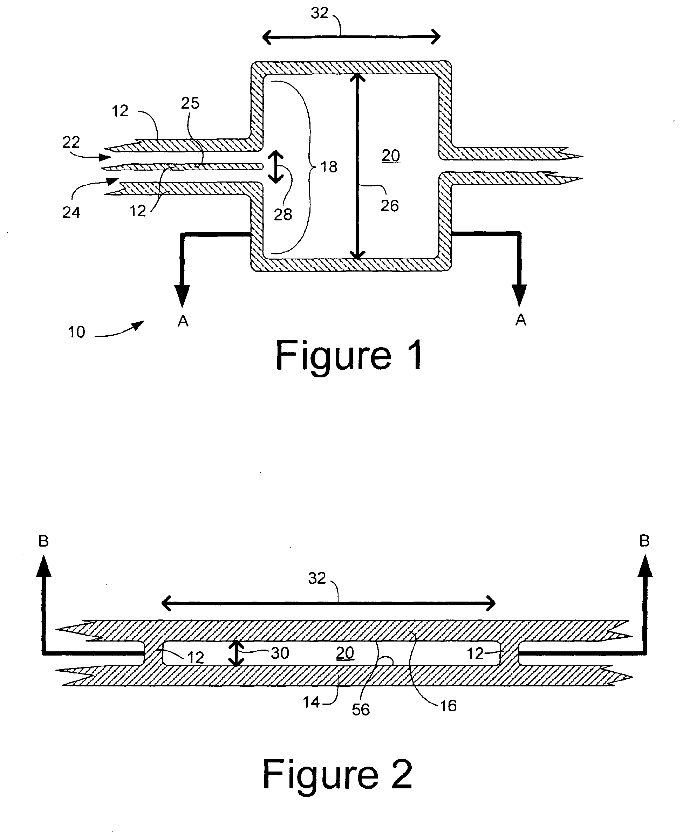

One embodiment of a microfluidic mixer 10 of the present invention is shown in Figures 1 and 2. The mixer 10 is generally planar, defined by walls 12 in the plane of Figure 1 and by a floor 14 and a ceiling 16 visible in Figure 2. (Although the mixer 10 of the present invention will be described in this orientation for convenience, it will be understood by those of skill in the art that implementations of the invention may have any desired orientation, and "floor," "ceiling," "height," "length," "width" and similar terms are thus relative terms only, not designating or requiring a particular orientation.)

The mixer 10 is desirably part of a microfluidic device for performing chemical or biological reactions (a microreactor) wherein mixing is required. The walls 12 and the floor 14 and ceiling 16 of the mixer 10 define a self-sustaining oscillating jet mixing chamber 20. Two or more separate feed channels 22 and 24 terminate at a common side 18 of the chamber 20. The channels 22 and 24 are separate until they reach the chamber 20, divided by one or more inter-channel walls.

The chamber 20 desirably has a width 26 perpendicular to the feed channels 22 and 24 of at least two times the total channel width 28 (defined as the width of the two or more feed channels and the one or more inter-channel walls 25 taken together) more desirably at least three times and even more desirably at least four times. The floor 14 and ceiling 16 of the chamber 20 form two opposing major surfaces 56 of the chamber 20 and define a height 30 of the chamber 20. The chamber 20 desirably has an aspect ratio of height 30 to width 26 of 1/10 or less. The length 32 and width 26 of the chamber 20 are selected to be sufficient to allow desired working fluids flowing into the chamber 20 through the two or more channels 22 and 24 to form a self-sustaining oscillating jet, oscillating from side to side in the direction of the width 26 of the chamber 20. The chamber 20 desirably has a major-surface-area to volume ratio of at least 5 cm² /cm³, desirably at least 10 cm² /cm³, and most desirably at least 15 cm² /cm³.

For chemical production applications, the height 30 of the chamber is desirably within the range of 0.1 to 2 mm inclusive, more desirably from 0.5 mm to 1.7 mm inclusive, and most desirably from 0.8 mm to 1.5 mm inclusive. A relatively small height compared to length and width, or a high major-surface-area to volume ratio, allow for good heat removal from (or easy heat addition to) the chamber 20.

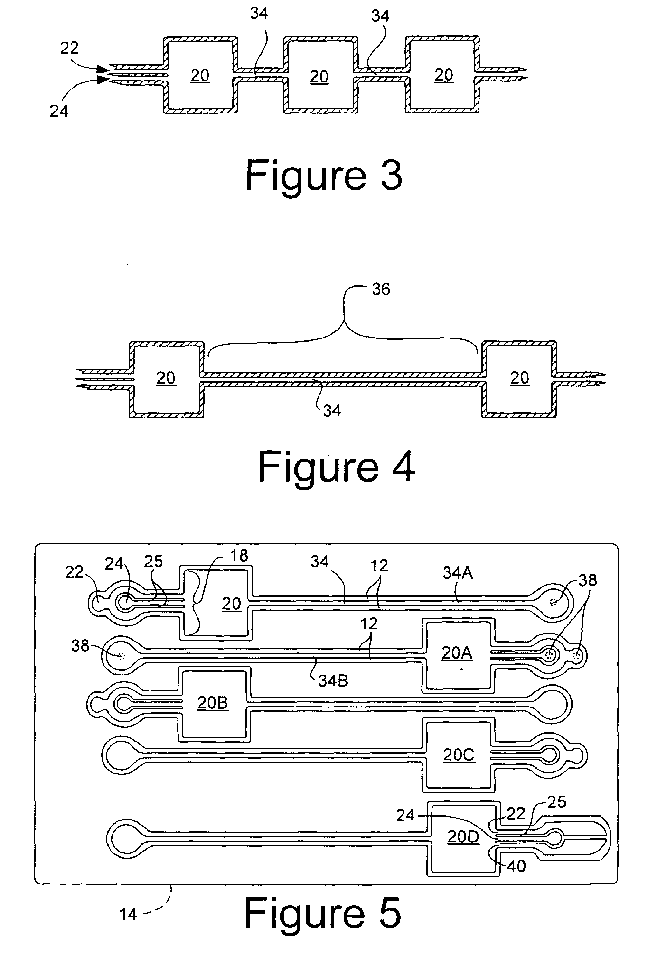

Figure 3 is a cross-sectional plan view of another embodiment of the present invention, according to which multiple chambers 20 are positioned serially along a microfluidic channel 34. Only at the first of the chambers 20, at the leftmost position in the figure, are two or more feed channels 22 and 24 positioned. The subsequent chambers 20 only have one feed channel, channel 34, but the subsequent chambers 20 each also serve to allow formation of self-sustaining oscillating jets. The multiple serially positioned oscillating jet mixing chambers 20 allow for increased or improved mixing by means of the additional oscillating jets, or allow for good maintenance of a suspension of immiscible liquids, if desired, or both. As shown in Figure 4, the successive mixing chambers 20 need not be positioned close together along the channel 34, but may be separated by a length of channel 36 that may serve to provide some heat exchange and some delay time before the next mixing occurs.

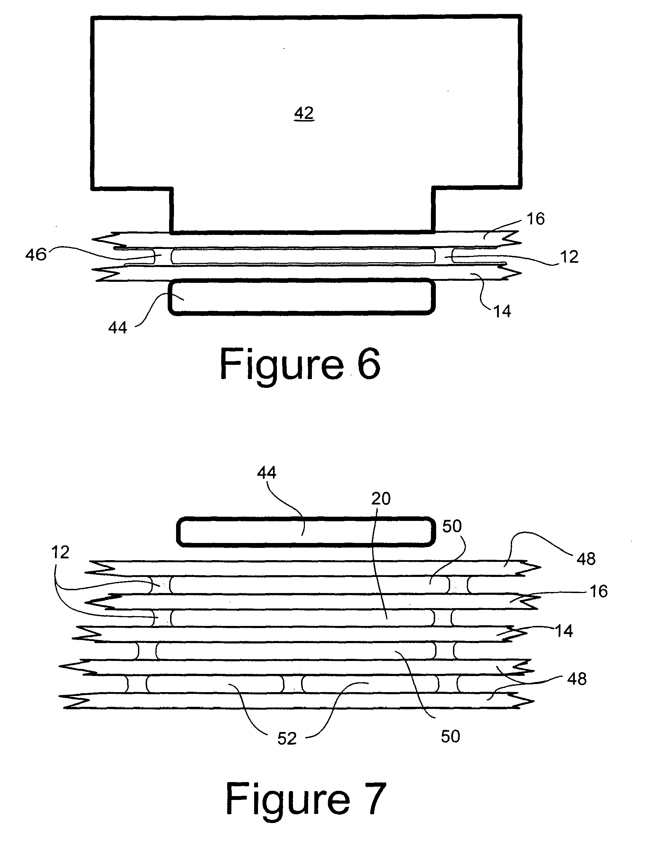

Figure 5 is a cross-sectional plan view of still another embodiment of the present invention in which multiple channels 34 are defined by walls 12 on a single floor 14 or lower substrate, shown in the Figure in dotted outline. In the embodiment of Figure 5, the side 18 at which the fluid(s) enter(s) the chamber 20 includes three channels terminating at the chamber 20, but as will be appreciated from the figure, the outside two channels are connected at their head and correspond to channel 22, while the inside channel corresponds to channel 24. Alternatively, as with the chamber 20D of the device of Figure 5, three or more completely independent channels 22, 24 and 40, may be included. The channels 22 and 24 at the top left of the Figure may be fed via ports through the ceiling of the device, not shown. Fluid may exit the channel 34A through the floor 12 through and re-enter the channel 34B through holes 38 in the floor 14. All of the channels shown may optionally be connected in the fashion so that the working fluid(s) pass through five self-oscillating jet chambers 20-20D, or some of the channels shown be independently accessible at their entrances and exits from the exterior of the device, for example, as in the parallel channels shown at the bottom of the Figure. Where through-holes like holes 38 are to be used to connect the various channels, a multilayer structure may be used such as that shown in cross section in Figure 7. It may be desirable to included on either side of the layer containing the mixer chamber 20 temperature control fluid chambers or fluid passages 50 designed to allow a heat exchange fluid to flow in a space adjacent to the mixing chamber 20. Passages 52 used as dwell-time and heat exchange passages, and optionally as photo-catalytic reaction passages or for other purposes, may advantageously be located on the bottom layer of the device as shown.

One advantage of the present device is that an efficient microfluidic mixing chamber 20 is provided having a very small height, on the order of 2 mm at the most, preferably about 1.7 mm or less, and more preferably about 1.5 mm or less. At the same time, however, the major surface of the mixing chamber is large relative to the height of the chamber. Accordingly, a radiator 42 such as a light or laser light producing device, an ultrasound generator, an electromagnetic field generator, or other radiator may be closely coupled to the mixing chamber 20 as shown schematically in the cross-section of Figure 6, through the ceiling 16 (one of two major surfaces of the chamber 20) and through the working fluid(s) themselves, so as to be able to irradiate any fluid in the chamber 20 with sonic, electric, magnetic, electro-magnetic, or other energy. A second radiator or a sensor 44 may also beneficially be used in conjunction with the mixing chamber 20, and may be positioned at the exterior of the floor 14 of the chamber 20, as shown in Figure 6. The radiator or sensor such as radiator or sensor 44 need not be in direct contact with the device, as shown for example in Figure 7.

The entire device desirably is comprised of glass, glass-ceramic or ceramic materials. These can provide superior heat and chemical resistance and translucence or transparency, to visible light and/or other portions of the electromagnetic spectrum, that may desirable for some applications. The device may be produced according to any of various methods, such as, for example, the method developed by associates of the present inventor and disclosed for example in US Patent No. 7,007,709. Therein is described the formation of microfluidic devices by positioning a shaped frit structure between two glass substrates, then sintering the frit to adhere the substrates and the frit together into a one-piece device having a fluidic chamber defined by the frit. As disclosed in the referenced patent, the layer of the frit material 46 that forms the walls 12, is also used to form a thin layer on the substrates (the floor 14 and ceiling16), as shown in Figure 6. If desired, alternate processes may be used that result in frit walls without thin layers, as shown in Figure 7 for example, or processes that result in a monolithic device without a dual-composition, such as the device represented in the cross-section of Figure 2. Such monolithic devices may be formed by hot pressing glass material between porous carbon molds, for example, as in the method disclosed in document EP 1 964 817, or by masked sand-blasting or masked etching to form the channel walls, followed by fusion or chemical bonding or other means of joining to form a monolithic device.

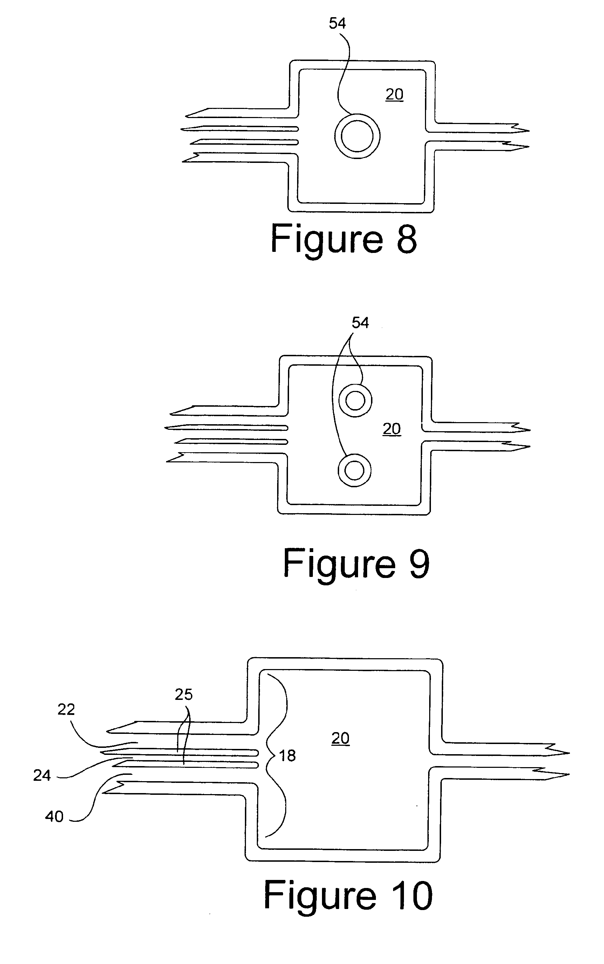

Where a particularly large major surface area is desired for the mixing chamber 20, which can lower the pressure resistance of the chamber, or where maximum pressure resistance is otherwise desired, one or more posts 54 may be formed of the wall material in the space within the chamber 20, as shown in Figures 8 and 9. As another alternative embodiment of the present invention, the channels (2, 24 and 40) need not all be the same size, as shown in the cross-sectional plan view of Figure 10. The central channel, channel 24, may desirably be smaller than the outside channels, or in other words, the inter-channel walls 25 may be closer together, particularly if the central channel is intended or expected to carry less volume than the outer channels. Other distributions of inter-channel walls and channel widths are of course possible.

The present invention also includes within its scope the use of the devices disclosed herein to perform mixing, the method comprising providing one or more feed channels each entering a chamber from a common direction, the chamber having at least one exit channel, the chamber having a width of at least two times the width of the one or more feed channels taken together; and flowing one or more fluid streams from the feed channels into the chamber at a sufficient rate to induce a self-sustaining oscillating jet within the chamber. The oscillating jet provides an efficient (in total energy used and pressure-drop across the mixer) mixing process, and one that can be scaled down significantly in the height dimension to allow for very good thermal control or for easy sensing or easy coupling of energy into the working fluid. The chamber desirably includes two opposing major surfaces and an aspect ratio of height to width of 0.1 or less, (and desirably a major-surface-area to volume ratio of at least 5 cm³/cm², desirably 10 cm²/cm³, and most desirably 15 cm²/cm³.

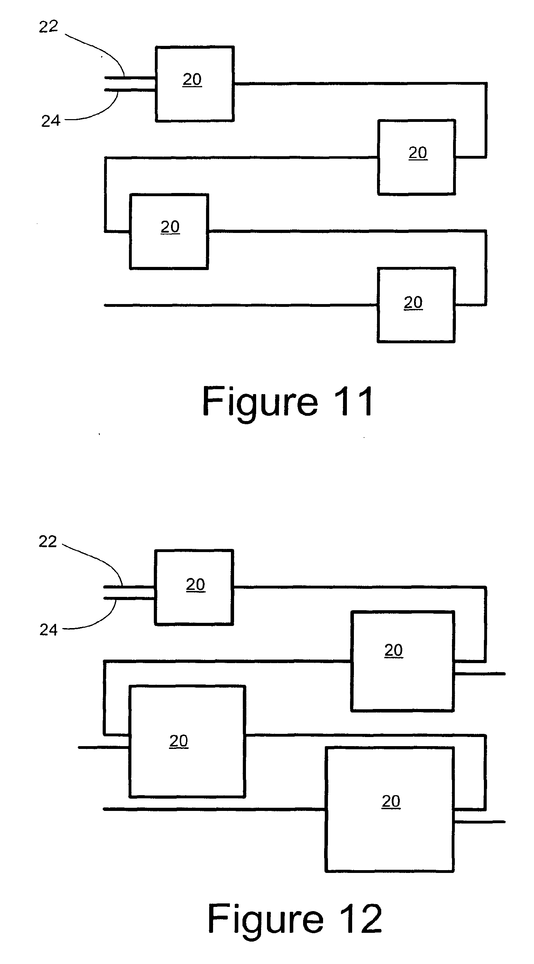

Figure 11 is a schematic plan view showing an embodiment in which mixing chambers 20 may be arranged along a channel first fed by channels 22 and 24. The later mixing chambers can serve to keep an immiscible phase in suspension. In the embodiment of Figure 12, two channels enter the fist mixing chamber 20, but one new channel is available for use at every mixing chamber. Accordingly, it may be desirable to increase the size of downstream mixing chambers as shown.

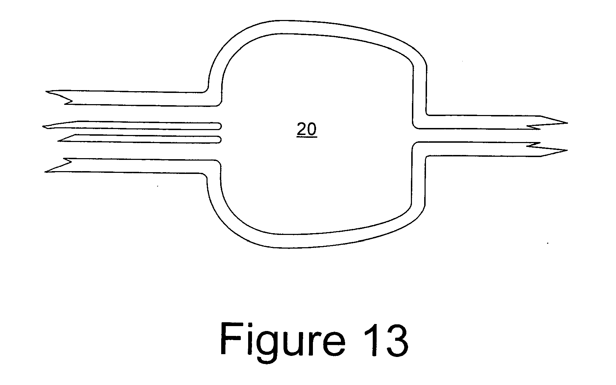

It is not necessary that the mixing chambers according to the present invention be rectangular. All that is needed is that the mixing chambers widen out sufficiently, and sufficiently suddenly, to allow for self-sustaining oscillation to occur within the chamber. An alternative mixing chamber shape is shown in Figure 13.

### Examples

Self-sustaining oscillating jet mixing chambers A-D were formed having the properties listed in the Table below.

| Designation | Height (mm) | Major surface area to volume (cm²/cm³) | Volume (ml) |
|---|---|---|---|
| A | 1.17 | 17.03 | 0.58 |
| B | 1.18 | 16.90 | 0.58 |
| C | 1.20 | 16.62 | 0.87 |
| D | 1.21 | 16.51 | 0.86 |

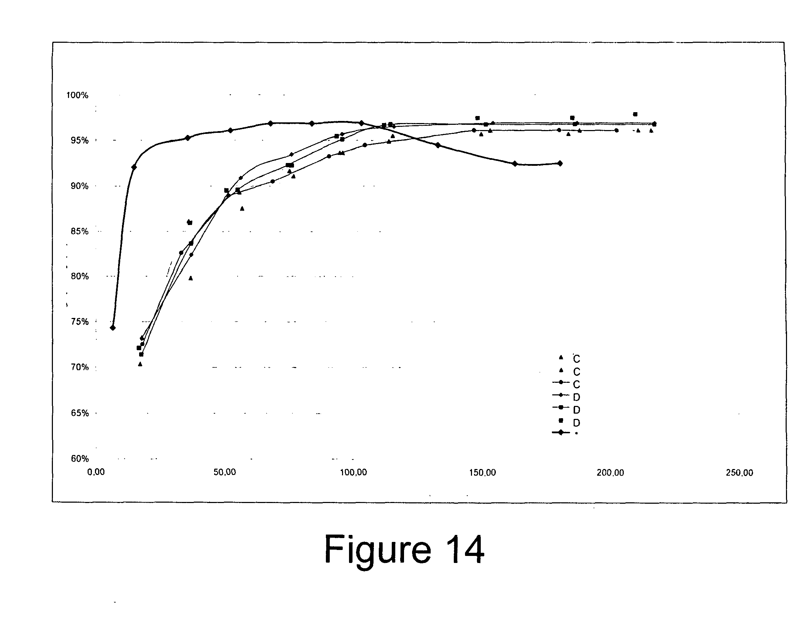

Channels were 0.5 mm wide and inter-channel walls were 0.6 mm wide, with channel structure similar to that shown in connection with chamber 20 of Figure 5 as discussed above. Mixing performance was then measured in two ways. As a first method of testing mixing performance, the method described in Villermaux J., et al. "Use of Parallel Competing Reactions to Characterize Micro Mixing Efficiency," AlChE Symp. Ser. 88 (1991) 6, p. 286, was used. In summary, the process was to prepare, at room temperature, a solution of acid chloride and a solution of potassium acetate mixed with KI (Potassium Iodide). Both of these fluids or reactants were then continuously injected by means of a syringe or peristaltic pump into the micromixer to be tested. The resulting test reaction results in two competing reactions of different speeds: a "fast" reaction that produces a UV absorbing end product, and an "ultrafast" one that dominates under ultrafast mixing conditions, producing a transparent solution. Mixing performance is thus correlated to UV transmission through the mixed fluid, with a theoretically perfect or 100% fast mixing yielding a 100% UV transmission in the resulting product. Figure 14 shows the mixing performance, given as percent transmittance over flow rate in milliliters per minute, of three instances of device C and three of device D, measured by this method. A comparative test is also shown by the trace marked with an asterisk ("*"), produced by a device having one or more successive mixing passages each in the form of a three-dimensionally tortuous passage, similar in form to the mixing passages disclosed in EP 1 604 733 and in EP 1 679 115, for example. As may be seen from the comparison, the performance of the mixers of the present invention is superior at high flow rates, particularly from about 100 ml/min up to 220 ml/min and above.

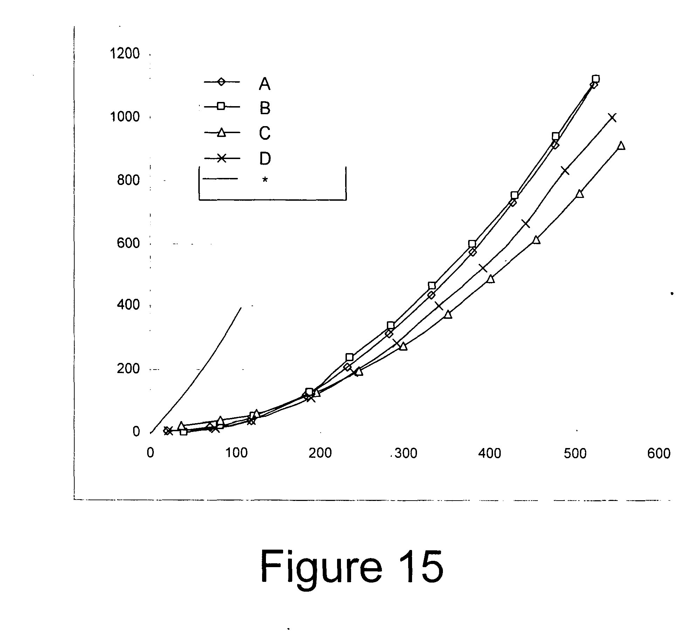

This good mixing is achieved at relatively low pressure drop compared to the comparative example, as shown in Figure 15, which shows pressure drop in millibar as a function of flow rate in milliliters per minute. As may be seen, doubling the flow from 100 to 200 milliliters per minute produces less than half of the total pressure drop, relative to the comparative device, but with equal or superior mixing as shown in Figure 14.

As a test for mixing immiscible liquids and dealing with solid particles, a reaction was conducted in which the two reactants are immiscible liquids and the product formed are colloidal particles, namely polystyrene spheres.

For this reaction, the following reaction scheme was used:

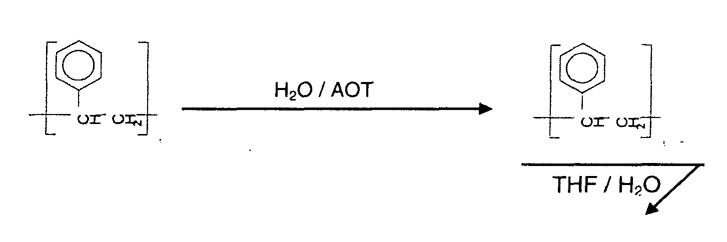

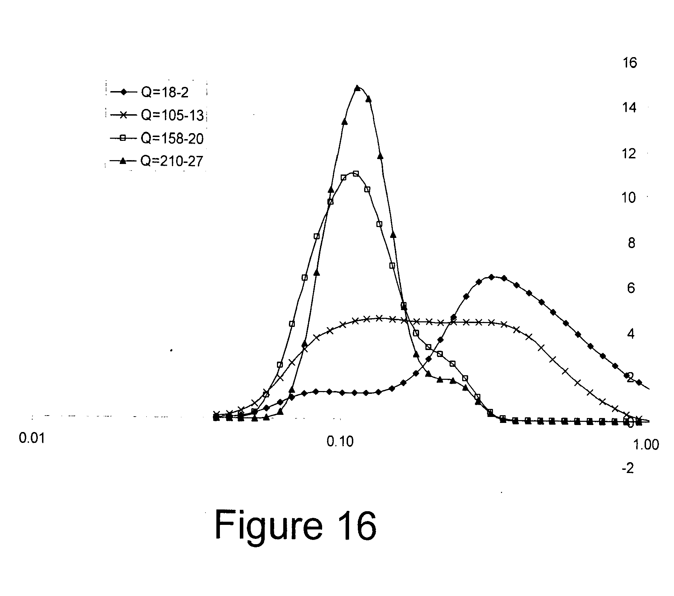

Polystyrene with THF as solvent was provided in one feed (0.5wt%) and a water solution containing the surfactant AOT was provided in the second feed (0.05wit%). The results are shown in figure 16, which is a graph of PSD (Particle Size Distribution) as a volume percentage as a function of the logarithmic particle size in microns. As may be seen from the figure, the threshold value to achieve best mixing, yielding a uniform particle size of about 0.10 microns, is around 158+20=178 total milliliters per minute. The distribution has almost no secondary peak at this flow rate and above. The values are comparable to the results obtainable from the comparative example, but with lower pressure drop. Thus equal quality mixing is available from the inventive devices, but simultaneously at higher flow rates and lower pressure drop.

## Claims

1. A microfluidic device (10) for performing chemical or biological reactions, the device comprising:
a chamber (20) for use as a self-sustaining oscillating jet mixing chamber; and two or more separate feed channels (22,24,40) separated by one or more inter-channel walls (25), the two or more channels (22,24,40) terminating at a common side (18) of the chamber (20), the two or more channels (22,24,40) having a total channel width (28) comprising the widths of the two or more channels (22,24,40) and all inter-channel walls (25) taken together, the chamber (20) having a width (26) in a direction perpendicular to the channels (22,24,40) and a length (32) in a direction parallel to the channels (22,24,40), the chamber (20) having two opposing major surfaces (56) defining a height (30) thereof;
and being **characterized in that**:
said width (26) is at least two times said total channel width (28) and said chamber (20) has a major-surface-area to volume ratio of at least 10 cm²/cm³.

2. The device of claim 1 wherein the chamber (20) has a major-surface-area to volume ratio of at least 15 cm²/cm³.

3. The device of either claim 1 or claim 2 wherein the chamber (20) further has an aspect ratio of height (30) to the greater of length (32) and width (26) of 1/10 or less.

4. The device of any of claims 1-3 further comprising an irradiator (42) structured and arranged to irradiate the chamber (20) with sonic, electric, magnetic, electro-magnetic, or other energy through at least one of the major surfaces thereof.

5. The device of any of claims 1-4 further comprising a sensing device (44) structured and arranged to sense one or more properties of the material within the chamber (20).

6. The device of any of claims 1-5 wherein one or both major surfaces of the chamber (20) are transparent.

7. The device of any of claims 1-6 wherein the device (10) is formed of glass, glass-ceramic or ceramic.

8. The device of any of claims 1-7 wherein the chamber (20) further comprises at least one post (54) extending between the two opposing major surfaces.

9. The device of any of claims 1-8 wherein the chamber (20) further comprises a single post (54) extending between the two opposing major surfaces.

10. A method of performing mixing or agitation of one or more fluids in a microfluidic device (10) for chemical or biological use, the method comprising the step of:
providing one or more separate feed channels (22,24,40) and a chamber (20), each of the one or more channels (22,24,40) entering the chamber (20) at a common wall (18) of the chamber (20), the one or more separate channels (22,24,40) having a total channel width (28) comprising the widths of the one or more separate channels (22,24,40) and all inter-channel walls (25) taken together, the chamber (20) having at least one exit channel;
and being **characterized in that** it further comprises:
flowing one or more fluid streams through the feed channels (22,24,40) into the chamber (20) at a sufficient rate to induce a self-sustaining oscillating jet within the chamber (20);
said chamber (20) having a width (26) in a direction perpendicular to the one or more channels (22,24,40) of at least two times said total channel width (28).

11. The method of claim 10 wherein providing the one or more separate feed channels (22,24,40) and the chamber (20) further includes the chamber (20) having a length (32) in a direction parallel to the channels (22,24,40) and having two opposing major surfaces defining a height (30) of the chamber (20) in a direction perpendicular to the length (32) and width (26), the chamber (20) having a major-surface-area to volume ratio of at least 10 cm²/cm³.

12. The method of claim 11 wherein providing the one or more separate feed channels (22,24,40) and the chamber (20) further includes the chamber (20) having an aspect ratio of height (30) to the greater of length (32) and width (26) of 1/10 or less.

## Patentansprüche

1. Mikrofluidische Vorrichtung (10) zum Ausführen von chemischen oder biologischen Reaktionen, wobei die Vorrichtung umfaßt:
eine Kammer (20) zur Verwendung als selbsterhaltende Schwingstrahlmischkammer und zwei oder mehr separate Zufuhrkanäle (22, 24, 40), die durch eine oder mehrere Zwischenkanalwände (25) getrennt sind, wobei die zwei oder mehr Kanäle (22, 24, 40) an einer gemeinsamen Seite (18) der Kammer (20) enden, wobei die zwei oder mehr Kanäle (22, 24, 40) eine Gesamtkanalbreite (28) haben, die die Breiten der zwei oder mehr Kanäle (22, 24, 40) und aller Zwischenkanalwände (25) zusammen umfaßt, wobei die Kammer (20) eine Breite (26) in einer Richtung senkrecht zu den Kanälen (22, 24, 40) und eine Länge (32) in einer Richtung parallel zu den Kanälen (22, 24, 40) hat, wobei die Kammer (20) zwei gegenüberliegende Hauptflächen (56) hat, die eine Höhe (30) derselben definieren,
und **dadurch gekennzeichnet ist, daß**:
die Breite (26) mindestens doppelt so groß wie die Gesamtkanalbreite (28) ist und die Kammer (20) ein Verhältnis von Hauptflächengröße zu Volumen von mindestens 10 cm²/cm³ hat.

2. Vorrichtung nach Anspruch 1, wobei die Kammer (20) ein Verhältnis von Hauptflächengröße zu Volumen von mindestens 15 cm²/cm³ hat.

3. Vorrichtung nach Anspruch 1 oder Anspruch 2, wobei die Kammer (20) ferner ein Schlankheitsverhältnis aus Höhe (30) zum größeren Wert von Länge (32) und Breite (26) von 1/10 oder darunter hat.

4. Vorrichtung nach einem der Ansprüche 1-3, die ferner eine Bestrahlungsvorrichtung (42) umfaßt, welche zum Bestrahlen der Kammer (20) mit Schall-, elektrischer, magnetischer, elektromagnetischer oder anderer Energie durch mindestens eine der Hauptflächen derselben aufgebaut und ausgelegt ist.

5. Vorrichtung nach einem der Ansprüche 1-4, die ferner einen Fühler (44) umfaßt, welcher zum Erfassen von einer oder mehreren Eigenschaften des Materials in der Kammer (20) aufgebaut und ausgelegt ist.

6. Vorrichtung nach einem der Ansprüche 1-5, wobei eine oder beide der Hauptflächen der Kammer (20) transparent sind.

7. Vorrichtung nach einem der Ansprüche 1-6, wobei die Vorrichtung (10) aus Glas, Glaskeramik oder Keramik gebildet ist.

8. Vorrichtung nach einem der Ansprüche 1-7, wobei die Kammer (20) ferner mindestens einen Pfosten (54) umfaßt, welcher sich zwischen den zwei gegenüberliegenden Hauptflächen erstreckt.

9. Vorrichtung nach einem der Ansprüche 1-8, wobei die Kammer (20) ferner einen einzelnen Pfosten (54) umfaßt, welcher sich zwischen den zwei gegenüberliegenden Hauptflächen erstreckt.

10. Verfahren zum Ausführen des Mischens oder Rührens von einer oder mehreren Fluiden in einer mikrofluidischen Vorrichtung (10) zum chemischen oder biologischen Gebrauch, wobei das Verfahren den folgenden Schritt umfaßt:
Bereitstellen von einem oder mehreren Zufuhrkanälen (22, 24, 40) und einer Kammer (20), wobei jeder des einen oder der mehreren Kanäle (22, 24, 40) in die Kammer (20) an einer gemeinsamen Wand (18) der Kammer(20) mündet, wobei der eine oder die mehreren separaten Kanäle (22, 24, 40) eine Gesamtkanalbreite (28) haben, die die Breiten des einer oder der mehreren separaten Kanäle (22, 24, 40) und aller Zwischenkanalwände (25) zusammen genommen sind, wobei die Kammer (20) mindestens einen Ausgangskanal hat,
und **dadurch gekennzeichnet ist, daß** es ferner umfaßt:
Strömen von einem oder mehreren Fluidströmen durch die Zufuhrkanäle (22, 24, 40) in die Kammer (20) mit einer ausreichenden Geschwindigkeit, um einen selbsterhaltenden Schwingstrahl innerhalb der Kammer (20) zu induzieren,
wobei die Kammer (20) eine Breite (26) in einer Richtung senkrecht zu dem einen oder den mehreren Kanälen (22, 24, 40) von mindestens dem Doppelten der Gesamtkanalbreite (28) hat.

11. Verfahren nach Anspruch 10, wobei das Bereitstellen des einen oder der mehreren separaten Zufuhrkanäle (22, 24, 40) und der Kammer (20) ferner umfaßt, daß die Kammer (20) eine Länge (32) in einer Richtung parallel zu den Kanälen (22, 24, 40) hat und zwei gegenüberliegende Hauptflächen hat, die eine Höhe (30) der Kammer (20) in einer Richtung senkrecht zur Länge (32) und Breite (26) hat, wobei die Kammer (20) ein Verhältnis von Hauptflächengröße zu Volumen von mindestens 10 cm²/cm³ hat.

12. Verfahren nach Anspruch 11, wobei der eine oder die mehreren separaten Zufuhrkanäle (22, 24, 40) und die Kammer (20) ferner umfaßt, daß die Kammer (20) ein Schlankheitsverhältnis der Höhe (30) zu dem größeren Wert aus Länger (32) und Breite (26) von 1/10 oder darunter hat.

## Revendications

1. Dispositif microfluidique (10) pour la mise en oeuvre de réactions chimiques ou biologiques, le dispositif comprenant :
une chambre (20) pour utilisation comme chambre de mélange à jet oscillant auto-entretenu ; et deux ou plus de deux canaux d'alimentation séparés (22, 24, 40) séparés par une ou plusieurs parois inter-canaux (25), les deux ou plus de deux canaux (22, 24, 40) se terminant sur un côté commun (18) de la chambre (20), les deux ou plus de deux canaux (22, 24, 40) ayant une largeur totale des canaux (28) comprenant les largeurs des deux ou plus de deux canaux (22, 24, 40) et de toutes les parois inter-canaux (25) prises ensemble, la chambre (20) ayant une largeur (26) dans une direction perpendiculaire aux canaux (22, 24, 40) et une longueur (32) dans une direction parallèle aux canaux (22, 24, 40), la chambre (20) ayant deux surfaces majeures opposées (56) définissant une hauteur (30) de celle-ci ;
et étant **caractérisé en ce que** :
ladite largeur (26) est au moins deux fois ladite largeur totale des canaux (28), et ladite chambre (20) possède un rapport superficie des surfaces majeures sur volume qui est au moins égal à 10 cm²/cm³,

2. Dispositif selon la revendication 1, dans lequel la chambre (20) possède un rapport superficie des surfaces majeures sur volume au moins égal à 15 cm²/cm³.

3. Dispositif selon la revendication 1 ou la revendication 2, dans lequel la chambre (20) présente en outre un rapport d'aspect, de la hauteur (30) sur la plus grande des deux valeurs que sont la longueur (32) et la largeur (26), égal à 1/10 ou moins.

4. Dispositif selon l'une quelconque des revendications 1 à 3, comprenant en outre un dispositif d'irradiation (42) structuré et agencé pour irradier la chambre (20) avec une énergie sonore, électrique, magnétique, électromagnétique ou autre, à travers l'une au moins des surfaces majeures de celle-ci.

5. Dispositif selon l'une quelconque des revendications 1 à 4, comprenant en outre un dispositif détecteur (44) structuré et agencé pour détecter une ou plusieurs propriétés du matériau à l'intérieur de la chambre (20).

6. Dispositif selon l'une quelconque des revendications 1 à 5, dans lequel l'une des deux surfaces majeures de la chambre (20) ou les deux est/sont transparente(s).

7. Dispositif selon l'une quelconque des revendications 1 à 6, dans lequel le dispositif (10) est formé en verre, en vitrocéramique ou en céramique.

8. Dispositif selon l'une quelconque des revendications 1 à 7, dans lequel la chambre (20) comprend en outre au moins un pilier (54) s'étendant entre les deux surfaces majeures opposées.

9. Dispositif selon l'une quelconque des revendications 1 à 8, dans lequel la chambre (20) comprend en outre un unique pilier (54) s'étendant entre les deux surfaces majeures opposées.

10. Procédé pour mettre en oeuvre un mélange ou une agitation d'un ou plusieurs fluides dans un dispositif microfluidique (10) pour utilisation chimique ou biologique, le procédé comprenant l'étape consistant à :
fournir un ou plusieurs canaux d'alimentation séparés (22, 24, 40) et une chambre (20), chacun des un ou plusieurs canaux (22, 24, 40) pénétrant dans la chambre (20) au niveau d'une paroi commune (18) de la chambre (20), les un ou plusieurs canaux séparés (22, 24, 40) ayant une largeur totale de canaux (28) comprenant les largeurs des un ou plusieurs canaux séparés (22, 24, 40) et de toutes les parois inter-canaux (25) prises ensemble, la chambre (20) ayant au moins un canal de sortie ;
et étant **caractérisé en ce qu'**il comprend en outre l'opération consistant à :
faire écouler un ou plusieurs courants de fluide à travers les canaux d'alimentation (22, 24, 40) vers la chambre (20) avec un débit suffisant pour induire un jet oscillant auto-entretenu à l'intérieur de la chambre (20) ;
ladite chambre (20) ayant une largeur (26), dans une direction perpendiculaire aux un ou plusieurs canaux (22, 24, 40) qui est au moins deux fois ladite largeur totale des canaux (28).

11. Procédé selon la revendication 10, dans lequel la fourniture des un ou plusieurs canaux d'alimentation séparés (22, 24, 40) et de la chambre (20) inclut en outre que la chambre (20) présente une longueur (32) dans une direction parallèle aux canaux (22, 24, 40) et présente deux surfaces majeures opposées définissant une hauteur (30) de la chambre (20) dans une direction perpendiculaire à la longueur (32) et à la largeur (26), la chambre (20) ayant un rapport superficie des surfaces majeures sur volume au moins égal à 10 cm²/cm³.

12. Procédé selon la revendication 11, dans lequel la fourniture des un ou plusieurs canaux d'alimentation séparés (22, 24, 40) et de la chambre (20) inclut en outre que la chambre (20) présente un rapport d'aspect de hauteur (30) sur la plus grande des deux valeurs que sont la longueur (32) et la largeur (26) égal à 1/10 ou moins.
